# EUROPEAN PATENT APPLICATION

(11) **EP 2 055 972 A2**
(43) Date of publication of application: **06.05.2009**
(21) Application number: 08018984.8
(22) Date of filing: 30.10.2008
(51) Int. Cl.: F16C 19/54, F16C 33/46, F16C 33/66, F16H 57/02

(54) **Arrangement with two lubricated rolling element bearings for supporting a pinion shaft**

(30) Priority: 31.10.2007 JP 2007283033
(71) Applicant: JTEKT Corporation, Osaka-shi Osaka 542-8502 (JP)
(72) Inventor: Ito, Masatoshi, Osaka-shi, Osaka 542-8502 (JP)
(74) Representative: Hager, Thomas Johannes

(57) **Abstract**

A pinion shaft (12) is supported in a housing (11) by two tapered roller bearings (13,14) which are arranged separately from each other in an axial direction, and these two tapered roller bearings (13,14) are lubricated with lubricating oil in the housing in oil bath lubrication method. A labyrinth forming member (40) in a disc-like shape is disposed with respect to a backward tapered roller bearing (13) out of the two tapered roller bearings (13,14), on an end face at a small diameter side of an inner ring (22) thereof in a press-contact manner, so as to be opposed to a rib part (24b) which is formed inwardly in a radial direction at a small diameter end of a cage (24). In this manner, a labyrinth structure for restricting a flow of the lubricating oil is formed between the rib part (24b) at the small diameter end side of the cage (24) and the labyrinth forming member (40).

## Description

### BACKGROUND OF THE INVENTION

The present invention relates to a bearing apparatus for supporting a pinion shaft, and more particularly, to the bearing apparatus for supporting the pinion shaft which is provided in a differential gear of a vehicle such as an automobile.

A differential gear mounted on a vehicle such as an automobile is provided with a supporting device for a pinion shaft which has a pinion gear formed at its one end, for enabling the pinion gear to be meshed with a ring gear which constitute a final reduction unit.
Generally, the bearing apparatus for supporting the pinion shaft is so constructed that the pinion shaft is supported in a housing by means of two rolling bearings of angular contact type. As the rolling bearings of the angular contact type, tapered roller bearings are employed for general purpose. Two tapered roller bearings are held inside the housing separately from each other in an axial direction and in back to back arrangement, and a spacer in a cylindrical shape is interposed between respective inner rings of the two bearings which are arranged separately. The tapered roller bearing has relatively large rotation resistance, because tapered rollers have large contact areas with respect to an outer ring and an inner ring, and a slid occurs with respect to a large rib portion of the inner ring. This tapered roller bearing is lubricated in an oil bath lubrication method in which lubricating oil inside the housing is passed through the tapered roller bearing. Therefore, in case where an excessive amount of the lubricating oil flows into the bearing, stirring resistance: of the lubricating oil is increased, which results in an increase of the rotation resistance. Moreover, abrasion powder from gears which is contained in the lubricating oil may enter into the bearing, and hence, the tapered rollers, the inner and outer rings are likely to be damaged.

In view of the above, various measures for restricting an amount of the lubricating oil passing through the tapered roller bearings which are provided as the supporting device for supporting the pinion shaft have been already proposed.
For example, in JP-A-2005-69421, there is disclosed such a structure that an inner ring of a tapered roller bearing is integrally provided, at a small diameter side end part thereof, with a cylindrical part having a smaller diameter than a small diameter rib portion for restricting an axial movement of the tapered rollers, and a bent part which is formed by bending an end part at a small diameter side of a cage is opposed to this cylindrical part thereby to form a labyrinth structure. According to this structure, a flow of the lubricating oil is restricted, because an inlet into which the lubricating oil for the tapered roller bearing flows is formed as the labyrinth structure, and hence, a lubricating amount of the tapered roller bearing can be restricted.
Moreover, in the No. JP-A-2005-273796, there is disclosed such a structure that a cage of a tapered roller bearing is made larger than a virtual conical plane which is formed by tying respective rotation axes of tapered rollers, and a rib part directed inwardly in a radial direction is formed at a small diameter side end of this cage, an inner diameter of this rib part being made smaller than an outer diameter of the inner ring, and this rib part is arranged so as to be opposed to a front face of the inner ring in non-contact manner thereby to form a labyrinth structure. In this structure too, a flow of the lubricating oil is restricted, because an inlet into which the lubricating oil for the tapered roller bearing flows is formed as the labyrinth structure in the same manner as in case of JP-A-2005-69421, and therefore, a lubricating amount of the tapered roller bearing can be restricted.

However, the method of restricting the amount of the lubricating oil passing through the tapered roller bearing according to the above described proposals can be applied only by modifying structures of the inner ring and the cage which constitute the tapered roller bearing, and there is such inconvenience that an already existing tapered roller bearing for general purpose cannot be employed as the bearing apparatus for supporting the pinion shaft. For this reason, there is a practical problem that a tapered roller bearing for particular use must be prepared as the bearing apparatus for supporting the pinion shaft, and in this case, production cost is increased..
Because the tapered roller bearing is a precision device requiring high precision, there is a problemthat the production cost will be particularly increased, in case where it is produced as a product for particular use of a small production amount.

### SUMMARY OF THE INVENTION

Under the circumstances, an object to be solved by the invention is to achieve a labyrinth structure which can restrict a flow of lubricating oil with a relatively simple structure, by employing an existing rolling bearing of angular contract type for general purpose as a bearing apparatus for supporting a pinion shaft, thereby to depress increase of production cost.

In order to attain the above described obj ect, the present invention provides the following arrangements.
(1) A bearing apparatus for supporting a pinion shaft provided with a pinion gear at one end thereof, the bearing apparatus comprising:
   a housing;
   two angular contact type rolling bearings which are arranged separately in an axial direction and support the pinion shaft in the housing, the two rolling bearings being arranged in back to back arrangement and being lubricated with lubricating oil in the housing by oil bath lubrication method;
   a cylindrical spacer interposed between respective inner rings of the rolling bearings,
   wherein at least one of the two rolling bearings includes a cage having a rib part which is formed inwardly in a radial direction at a small diameter end side of the cage, and a disc-shaped labyrinth forming member disposed on an end face at a small diameter side of the inner ring of the rolling bearing in press-contact manner so as to be opposed to the rib part, such that a labyrinth structure for restricting a flow of the lubricating oil is formed between the rib part and the labyrinth forming member.
(2) The bearing apparatus according to (1), wherein the labyrinth forming member is formed as an independent single component, and interposed between an end face of the spacer and the end face at the small diameter side of the inner ring.
(3) The bearing apparatus according to (1), wherein the labyrinth forming member is integrally formed with an end part of the spacer.

According to the first aspect of the invention, while the rolling bearing of the angular contact type such as the tapered roller bearing which is employed in the bearing apparatus for supporting the pinion shaft is an existing product for general purpose, the labyrinth forming member is disposed on the end face at the small diameter side of the inner ring of the bearing in a press-contact manner, whereby the labyrinth structure is formed between the labyrinth forming member and the rib part which is formed inwardly in the radial direction at the small diameter end side of the cage. Because this labyrinth structure is formed at a position close to an inlet of the lubricating oil flowing into the rolling bearing of the angular contact type, the flow of the lubricating oil into the rolling bearing of the angular contact type is restricted by this labyrinth structure, and therefore, a lubricating amount of the rolling bearing of the angular contact type can be restricted.
As described, according to the first aspect of the invention, because the bearing apparatus for supporting the pinion shaft is constructed by employing the existing rolling bearing of the angular contact type for general purpose, increase of the production cost can be depressed as compared with the case where the conventional tapered roller bearing made for particular purpose is employed.
Moreover, the labyrinth structure is formed only by adding the labyrinth forming member in a disc-like shape to the existing constituent components, and the labyrinth forming member can be disposed in such a relatively simple arrangement that it is fitted to the end face at the smaller diameter side of the inner ring in a press-contact manner.

According to the second aspect of the invention, the labyrinth forming member is formed as an independent single component. Therefore, the labyrinth forming member can be relatively easily produced, and at the same time, can be relatively easily disposed, because it is simply interposed between the end face of the spacer in a cylindrical shape and the small diameter side end face of the inner ring.

According to the third aspect of the invention, the labyrinth forming member is integrally formed with the end part of the spacer in a cylindrical shape. Therefore, it is possible to easily handle the labyrinth forming member when it is assembled. Specifically, because the labyrinth forming member is integrally formed with the spacer, it can be assembled at the same time when the spacer is assembled. Therefore, the number of assembling steps will not be increased.

In the bearing apparatus for supporting the pinion shaft according to the invention, the following advantages can be obtained by adopting the above described means.
Firstly, according to the bearing apparatus for supporting the pinion shaft in the above described first invention, increase of the production cost can be depressed as compared with the case where the conventional tapered roller bearing made for particular purpose is employed. Moreover, the labyrinth structure is formed only by adding the labyrinth forming member in a disc-like shape to the existing constituent components, and can be achieved with a relatively simple structure.

Secondly, according to the above described second invention, the labyrinth forming member can be relatively easily produced, and at the same time, can be relatively easily disposed because it is simply interposed between the end farce of the spacer in a cylindrical shape and the end face at the small diameter side of the inner ring.
Then, according to the above described third invention, because the labyrinth forming member is integrally formed with the spacer, it can be assembled at the same time when the conventional spacer is assembled. Therefore, the labyrinth forming member can be easily handled without increasing the number of assembling steps.

### BRIEF DESCRIPTION OF THE DRAWINGS

Fig. 1 is a sectional view showing a differential gear provided with a bearing apparatus for supporting a pinion shaft, in a first embodiment according to the invention.
Fig. 2 is an enlarged sectional view showing the bearing apparatus for supporting the pinion shaft in the first embodiment.
Fig. 3 is an enlarged sectional view showing a backward tapered roller bearing which is arranged close to a pinion gear in Fig. 2.
Fig. 4 is a sectional view showing a modification of the first embodiment.
Fig. 5 is an enlarged sectional view of a backward tapered roller bearing in a second embodiment, as shown in contrast with Fig. 3.
Fig. 6 is a sectional view showing an arrangement of another bearing apparatus for supporting a pinion shaft according to the invention, as shown in contrast with Fig. 2 in which the first embodiment is shown.

### DETAILED DESCRIPTION OF PREFERRED EMBODIMENTS

Now, an embodiment in a best mode for carrying out the invention will be described referring to the drawings. This embodiment is applied to a bearing apparatus for supporting a pinion shaft which is provided on a differential gear of a vehicle such as an automobile.

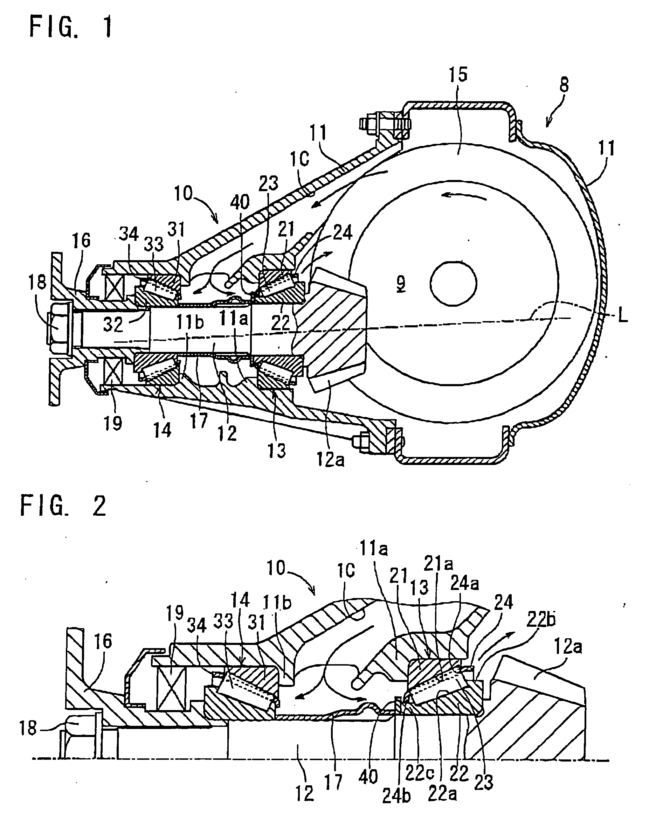

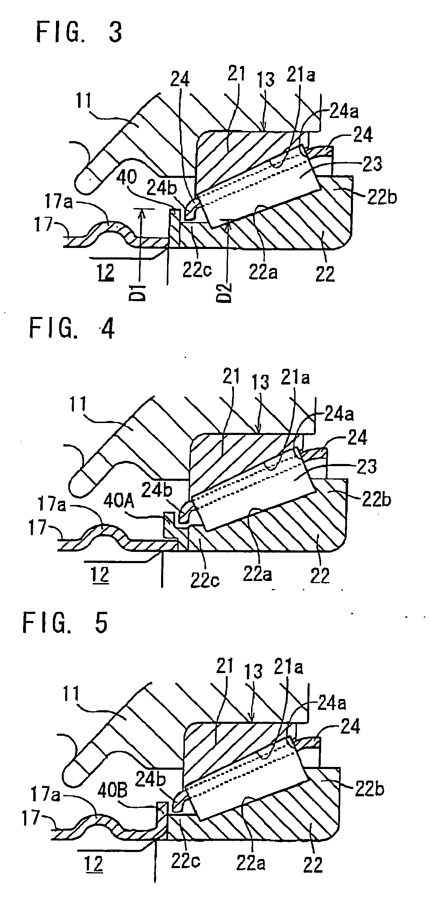

To begin with, a first embodiment will be described. The first embodiment is shown in Figs. 1 to 3. Fig. 1 is a sectional view showing an entirety of a differential gear 8, Fig. 2 is an enlarged sectional view showing a bearing apparatus 10 for supporting a pinion shaft in Fig. 1, and Fig. 3 is an enlarged view of a tapered roller bearing 13 in Fig. 2, which is provided close to a pinion gear. In this first embodiment, two rolling bearings of angular contact type which are separately arranged in an axial direction are both tapered roller bearings 13, 14 of a single row.
The bearing apparatus 10 for supporting the pinion shaft which is provided on the differential gear 8 is so constructed that a pinion shaft 12 having a pinion gear 12a is supported by two tapered roller bearings 13, 14 of a single row inside a housing 11 of two-piece structure. The pinion gear 12a of the pinion shaft 12 is meshed with a ring gear 15 thereby to constitute a final reduction unit 9. The two tapered roller bearings 13, 14 of a single row are arranged with respect to the pinion shaft 12 so as to be separated from each other in the axial direction. It is to be noted that in illustrating the pinion shaft 12, an end part side where the pinion gear 12a is formed is hereinafter referred to as a backward side, and when the two tapered roller bearings 13, 14 must be discriminated, the tapered roller bearing 13 which is provided close to the pinion gear 12a is called as a backward tapered roller bearing, while the tapered roller bearing 14 which is provided remote from the pinion gear 12a is called as a forward tapered roller bearing.

The backward tapered roller bearing 13 and the forward tapered roller bearing 14 are incorporated in a so-called back to back arrangement, and assembled with preload which is given by locating method. This preload by locating method is set in the following manner. A back face of an outer ring 21 of the backward tapered roller bearing 13 and a back face of an outer ring 31 of the forward tapered roller bearing 14 are respectively butted against stepped parts 11a, 11b of the housing 111 which are formed inwardly in a radial direction, a back face of an inner ring 22 of the backward tapered roller bearing 13 is butted against a side face of the pinion gear 12a, and a back face of an inner ring 32 of the forward tapered roller bearing 14 is butted against an inner end face of a companion flange 16, and further, a spacer 17 in a cylindrical shape is interposed between a front face of the inner ring 22 of the backward tapered roller bearing 13 and a front face of the inner ring 32 of the forward tapered roller bearing 14. In this state, a nut 18 is fastened thereby to set the preload. Moreover, a labyrinth forming member 40, which will be described below in detail, is interposed between the inner ring 22 of the backward tapered roller bearing 13 and the spacer 17, thereby to form a labyrinth structure with respect to the backward tapered roller bearing 13.
The two tapered roller bearings 13, 14 are so constructed that a plurality of tapered rollers 23, 33 are respectively interposed between the outer rings 21, 31 and the inner rings 22, 32, and these tapered rollers 23, 33 are respectively retained by cages 24, 34 at equal intervals in a circumferential direction. In this embodiment, the two tapered roller bearings 13, 14 are readymade products which have been produced for general purpose.

The backward tapered roller bearing 13 and the forward tapered roller bearing 14 which are arranged in front and in back of the pinion shaft 12 in the axial direction are lubricated in a lubricating method called as oil bath lubrication, in which lubricating oil contained in the housing 11 is allowed to pass through interiors of the bearings 13, 14. The lubricating oil is contained in the housing 11 at a level L as shown by a one-dot chain line in Fig. 1, and substantially lower halves of the two backward tapered roller bearing and forward tapered roller bearing 13, 14 which are arranged forward and backward are soaked in this lubricating oil. The lubricating oil in the housing 11 is splashed up in an upward direction with the rotation of the ring gear 15, as shown by an arrow mark in Fig. 1, and flows through an oil passage 1c in the housing 11 into a space between the two backward tapered roller bearing 13 and forward tapered roller bearing 14 which are arranged forward and backward. Then, the lubricating.oil flows through the interiors of the two tapered roller bearings 13, 14 thereby to perform the lubrication of the two tapered roller bearings 13, 14. The two tapered roller bearings 13, 14 which support the pinion shaft 12 are lubricated through the above described route.

By the way, an opening of the housing 11 at a side provided with the companion flange 16 is closed with a tight sealing unit 19, and therefore, a larger amount of the lubricating oil is likely to flow toward the backward tapered roller bearing 13 close to the pinion gear 12a rather than toward the forward tapered roller bearing 14 remote from the pinion gear 12a (close to the companion flange. 16). Accordingly, in this embodiment, the labyrinth structure for restricting the flow of the lubricating oil is formed only with respect to the backward tapered roller bearing 13. It is apparent that the labyrinth structure may be formed with respect to the forward tapered roller bearing 14 too, according to necessity, and further, may be formed with respect to both the backward tapered roller bearing 13 and the forward tapered roller bearing 14. An arrangement of this labyrinth structure is also applied in the same manner to other embodiments, which will be descr.ibedbelow.

The labyrinth structure formed with respect to the backward tapered roller bearing 13 is formed by interposing the labyrinth forming member 40 in a disc-like shape between the inner ring 22 of the backward tapered roller bearing 13 and the spacer 17, as shown in detail in Figs. 2 and 3.
In this embodiment, the backward tapered roller bearing 13 which is readymade for general purpose is employed, as described above. A specific structure of the backward tapered roller bearing 13 in this embodiment will be described. The inner ring 22 has a raceway face 22a at an intermediate in the axial direction of an outer peripheral face thereof, and a large rib portion 22b and a small rib portion 22c are respectively formed at a large diameter side end and at a small diameter side end of this raceway face 22a. The cage 24 has a tapered shape, and pockets 24a which open inward and outward in the radial direction are formed at a plurality of positions in a circumferential direction of the cage 24. A rib part 24b directed inward in the radial direction is formed at a small diameter end part of the cage 24. Moreover, in this embodiment, the inner ring 22 and the outer ring 21 of the backward tapered roller bearing 13 are in such positional relation in the axial direction that a left side end face (forward end face), as seen in Fig. 3, of the small rib portion 22c of the inner ring 22 is slightly projected beyond a left side end face of the outer ring 21. The above described rib part 24b of the cage 24 is positioned outside of this projected portion in the radial direction.
As seen in Figs. 2 and 3, the labyrinth forming member 40 in a disc-like shape is interposed between the left end face of the inner ring 22 of the backward tapered roller bearing 13, that is, the left end face of the small rib portion 22c and a right end face of the spacer 17, in a state where the labyrinth forming member 40 is press-contacted with the left end face of the inner ring 22 by a resilient force of a curved portion 17a of the spacer 17. In a state where the labyrinth forming member 40 is arranged in press-contact manner on the left end face of the inner ring 22, an outer peripheral part of the labyrinth forming member 40 is opposed to the rib part 24b of the cage 40, Specifically, as shown in Fig. 3, an outer diameter D1 of the labyrinth forming member 40 in a disc-like shape is formed larger than an inner diameter D2 of the rib part 24b of the cage 24. As the results, small gaps in the radial direction and in the axial direction are formed between a side face of the rib part 24b which is formed in the small diameter part of the cage 24 so as to be directed inward in the radial direction and a side face of the outer peripheral part of the labyrinth forming member 40 in a disc-like shape, and between a tip end of the rib part 24b directed inward in the radial direction and an outer peripheral face of the small rib portion 22c of the inner ring 22, and thus, the labyrinth structure is formed by communicating these gaps. It is to be noted that the labyrinth structure can be formed, in case where the outer diameter D1 of the labyrinth forming member 40 is equal to or larger than the inner diameter D2 of the rib part 24b of the .cage 24.

As the results, the lubricating oil flowing toward the backward tapered roller bearing 13 is restricted to a relatively small amount, when it flows from the labyrinth structure which is formed by disposing the labyrinth forming member 40, and enters through a determined gap between the outer peripheral face of the cage 24 and the raceway face 21a of the outer ring 21. In this manner, the amount of the lubricating oil flowing into the backward tapered roller bearing 13, that is, a passing amount of the lubricating oil for lubricating the backward tapered roller bearing 13 is restricted. This passing amount of the lubricating oil can be regulated by appropriately setting widths and lengths of the gaps in the labyrinth structure.
The lubricating oil which has flowed into the backward tapered roller bearing 13 passes while spreading in an entire area of an annular space between the outer ring 21 and the inner ring 22 opposed to each other, as shown by arrow marks in Fig. 2, and hence, areas of the outer ring 21, the tapered rollers 23, and the inner ring 22 to be contacted with one another are favorably lubricated. It is to be noted that the tapered rollers 23 get in touch with the large rib portion 22b of the inner ring 22, while they roll on the raceway face 21a of the outer ring 21 and the raceway face 22a of the inner ring 22, as shown in Fig. 2. However, the tapered rollers 23 do not get in touch with the small rib portion 22c of the inner ring 22, but are separated. This small rib portion 22c of the inner ring 22 is provided mainly for the purpose of facilitating assembling steps and maintenance.

As described above, according to the first embodiment, the labyrinth structure is formed by disposing the labyrinth forming member 40 in a disc-like shape with respect to the backward tapered roller bearing 13 which is arranged close to the pinion gear 12a, and hence, it is possible to restrict the amount of the lubricating oil flowing into the backward tapered roller bearing 13 to a proper passing amount. In this case, because the tapered roller bearing which is readymade for general purpose is employed as the backward tapered roller bearing 13, increase of the production cost can be depressed as compared with the case where the conventional tapered roller bearing made for particular purpose is employed for the purpose of restricting the amount of the lubricating oil. Moreover, the labyrinth structure is formed only by adding the labyrinth forming member 40 in a disc-like shape to the existing constituent components, and the labyrinth forming member 40 can be disposed in a relatively simple arrangement that it is fitted to the end face of the smaller diameter side of the inner ring in a press-contact manner.

Then, a modification of the above described first embodiment will be described. Fig. 4 is a sectional view showing the modification in contrast with Fig. 3 in which the above described first embodiment is shown. It is to be noted that structure of this modification is the same as the structure in the above described first embodiment, except the structure as described below. Therefore, the components corresponding to those in the first embodiment will be denoted with the same reference numerals.
In this modification, the structure of the inner ring 22 of the readymade tapered roller bearing 13 is different from that of the first embodiment. Specifically, positional relation in the axial direction between the inner ring 22 and the outer ring 21 of the tapered roller bearing 13 is such that the small rib portion 22c of the inner ring 22 is slightly retreated from the left side end face of the outer ring 21. More specifically, the small rib portion 22c is retreated by a thickness of the rib part 24b which is formed inwardly in the radial direction in the cage 24. Therefore, a labyrinth forming member 40A in a disc-like shape has a stepped shape in a sectional view which is stepped by a wall thickness of a rib part 24b of the cage 24. In this manner, the labyrinth structure is formed between the rib part 24b of the cage 24 and a position having the stepped shape of the labyrinth forming member 40A, and the flow of the lubricating oil is properly restricted in the same manner as in the first embodiment.

Then, a second embodiment of the invention will be described. The second embodiment is shown in Fig. 5. Fig. 5 is a sectional view showing the second embodiment in contrast with Fig. 3 in which the above described first embodiment is shown. Accordingly, structure of the second embodiment too is the same as the structure in the above described first embodiment, except the structure as describedbelow. Therefore, the components corresponding to those in the first embodiment will be denoted with the same reference numerals..
In this second embodiment, a labyrinth forming member 40B in a disc-like shape is integrally formed with a right end part of the spacer 17 in a cylindrical shape, as seen in Fig. 5. Also in this structure, the labyrinth structure is formed in the same manner as in the first embodiment, and the flow of the lubricating oil into the tapered roller bearing 13 is restricted to perform proper lubrication.
According to the second embodiment, because the labyrinth forming member 40B is integrally formed with the end part of the spacer 17, it is possible to easily handle the labyrinth forming member 40B when it is fitted. Specifically, because the labyrinth forming member 40B is integrally formed with the spacer 17, it is possible to assemble the labyrinth forming member. 40B at the same time when the spacer is assembled. Therefore, the number of assembling steps will not be increased.

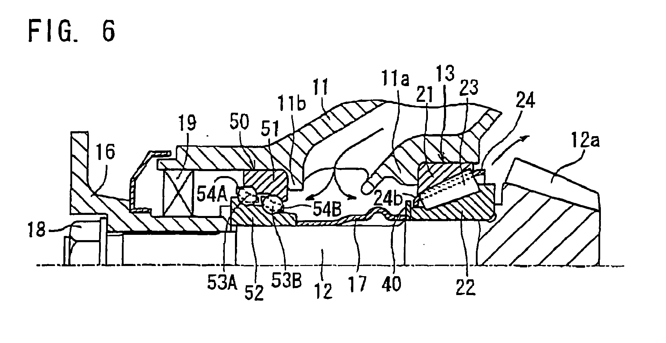

Although the embodiments of the invention have been heretofore described, various other embodiments of the invention can be considered.
For example, although in the above described embodiments, the case where the angular contact type rolling bearings which are disposed both forward and backward are the tapered roller bearings 13, 14 of a single row has been described, it is also possible to employ angular ball bearings. Fig. 6. shows an embodiment in which a double row angular ball bearing 50 is employed as the angular contact type rolling bearing to be disposed forward.
The double row angular ball bearing 50 as shown in Fig. 6 includes and outer ring 51, an inner ring 52, balls 53A, 53B in two rows, and two cages 54A, 54B. In this double row angular ball bearing 50, the balls 53A and 53B in two rows have the same diameter, and a pitch circle diameter of the ball 53A of the one row is made larger than a pitch circle diameter of the ball 53B of the other row. Further, contact angles of the balls 53A, 53B of the two rows are the same, and two action lines are inclined in the same direction. In some cases, the diameters and the contact angles of the balls 53A, 53B in the two rows may be made different.
In case where the labyrinth structure is formed with respect to the double row angular ball bearing 50, either of the labyrinth forming members 40, 40A, 40B is disposed so as to be opposed to a rib part at a small diameter side of a cage 54B of the ball 53B of the other row. However, in the angular ball bearing 50 in which rolling elements are ball, a stirring resistance of the lubricating oil when the lubricating oil passes is smaller, as compared with the tapered roller bearing in which the rolling elements are tapered rollers in the above described embodiments. Therefore, there is less necessity of forming the labyrinth-structure than in case of the tapered roller bearing. Particularly, there is less necessity in case where the angular ball bearing 50 is employed as the forward bearing in which the flow of the lubricating oil is smaller than in the backward bearing, as in the structure as shown in Fig. 6.

## Claims

1. A bearing apparatus for supporting a pinion shaft provided with a pinion gear at one end thereof, the bearing apparatus comprising:
a housing;
two angular contact type rolling bearings which are arranged separately in an axial direction and support the pinion shaft in the housing, the two rolling bearings being arranged in back to back arrangement and being lubricated with lubricating oil in the housing by oil bath lubrication method;
a cylindrical spacer interposed between respective inner rings of the rolling bearings,
wherein at least one of the two rolling bearings includes a cage having a rib part which is formed inwardly in a radial direction at a small diameter end side of the cage, and a disc-shaped labyrinth forming member disposed on an end face at a small diameter side of the inner ring of the rolling bearing in press-contact manner so as to be opposed to the rib part, such that a labyrinth structure for restricting a flow of the lubricating oil is formed between the rib part and the labyrinth forming member.

2. The bearing apparatus according to claim 1, wherein the labyrinth forming member is formed as an independent single component, and interposed between an end face of the spacer and the end face at the small diameter side of the inner ring.

3. The bearing apparatus according to claim 1, wherein the labyrinth forming member is integrally formed with an end part of the spacer.
